# EUROPEAN PATENT SPECIFICATION

(11) **EP 4 080 238 B1**
(45) Date of publication and mention of the grant of the patent: **11.11.2026**
(21) Application number: 21169553.1
(22) Date of filing: 21.04.2021
(51) Int. Cl.: G01S 7/40

(54) **DIGITAL DATA FEED OF RADIO DETECTION AND RANGING, RADAR, SIGNAL ANALYSIS SYSTEMS**
DIGITALE DATENEINSPEISUNG VON FUNKERFASSUNG UND ENTFERNUNGSMESSUNG, RADAR, SIGNALANALYSESYSTEME
APPLICATION DE DONNÉES NUMÉRIQUES EN ENTRÉE DE SYSTÈMES DE DÉTECTION ET DE TÉLÉMÉTRIE PAR RADIO, DE RADAR ET D'ANALYSE DE SIGNAUX

(43) Date of publication of application: 26.10.2022
(73) Proprietor: Rohde & Schwarz GmbH & Co. KG, 81671 München (DE)
(72) Inventor: Benneckenstein, Tim, 83646 Bad Tölz (DE); Vielhuber, Robert, 84405 Dorfen (DE); Lenz, Rainer, 81379 München (DE); Roeder, Thomas, 24161 Altenholz (DE)
(74) Representative: Novagraaf Group

(56) References cited:
- GB-A- 2 451 615
- US-A- 6 075 480
- KEYSIGHT: "Keysight Technologies Simulation and Verification of Pulse Doppler Radar Systems Application Note", 1 December 2017 (2017-12-01), pages 1 - 17, XP055840842, Retrieved from the Internet <URL:https://www.keysight.com/de/de/assets/7018-02463/application-notes/5990-5392.pdf> [retrieved on 20210914]
- TOKER ONUR ET AL: "Design of a Cyberattack Resilient 77 GHz Automotive Radar Sensor", ELECTRONICS, vol. 9, no. 4, 28 March 2020 (2020-03-28), pages 573, XP055840844, DOI: 10.3390/electronics9040573
- SCHULTE WALTER: "THREAT SIMULATION AND VERIFICATION FOR RADAR WARNING RECEIVER TESTING", APPLICATION NOTE, 30 November 2020 (2020-11-30), pages 1 - 23, XP055840847, Retrieved from the Internet <URL:https://scdn.rohde-schwarz.com/ur/pws/dl_downloads/dl_application/application_notes/1gp123/1GP123_1E_Threat_Simulation_and_Verification_for_Radar_Warning_Receiver_Testing.pdf> [retrieved on 20210914]
- KENNEY DAVID ET AL: "Transparent scene stimulation of coherent embedded radar systems", 2014 INTERNATIONAL RADAR CONFERENCE, IEEE, 13 October 2014 (2014-10-13), pages 1 - 5, XP032746220, [retrieved on 20150312], DOI: 10.1109/RADAR.2014.7060323
- LAM ERIC P ET AL: "A hardware-in-the-loop simulation program for ground-based radar", MODELING AND SIMULATION FOR DEFENSE SYSTEMS AND APPLICATIONS VI, SPIE, 1000 20TH ST. BELLINGHAM WA 98225-6705 USA, vol. 8060, no. 1, 13 May 2011 (2011-05-13), pages 1 - 9, XP060013848, [retrieved on 19010101], DOI: 10.1117/12.883582

## Description

### Technical Field

The present disclosure relates to RADAR signal analysis, and in particular, to devices and methods for generating a digital RADAR signal description to be supplied to a RADAR signal analysis system, to an arrangement of the device and the system, and to particular uses of the arrangement.

### Background Art

Testing of RADAR systems and components may nowadays be based on PC-based software, which enables designing emission scenarios and calculating the incident RADAR signal at a receiver. The calculated RADAR signal is obtained by an upload onto a radio frequency (RF) signal generator.

With this setup, devices under test (DUTs) like Radar Warning Receivers (RWR), direction finders (DF) or RF components can be tested via their respective RF ports.

However, these complex systems comprise of several submodules apart from the RF frontend section.

Complex signal processing algorithms, such as sorting, de-interleaving, classifying, ranging and tracking do not apply to the RF signal directly, but to a digitized signal in the form of I/Q data or compressed descriptions of analyzed pulses, so called pulse descriptor words (PDW).

Especially in SW development labs, there is a need for direct testing of a digital signal processing (DSP) of RADAR receivers without the respective RF frontend. However, there may simply not be enough RF hardware available, or sometimes the RF frontend may not be available yet due to parallel RF and DSP development. In addition, SW developers often mention that setting up and calibrating a complex RF arrangement is a difficult task. As such, the required digital RADAR signals are usually generated using general-purpose simulation and analysis tools like Matlab. In other words, everything besides the pre-defined toolboxes and libraries needs to be coded by the developers themselves.

GB 2451615 A, US 6,075,480 A1, Keysight Technologies Application Note "Simulation and Verification of Pulse Doppler Radar Systems *",* and Kennedy et al., "Transparent scene stimulation of coherent embedded radar systems", in 2014 International Radar Conference, respectively disclose a device for generating a digital radio detection and ranging, RADAR, signal (description) to be supplied to a RADAR signal analysis system under test, wherein the device comprises an interface configured to directly supply said digital RADAR signal (description) to a digital signal processing, DSP, stage of a receiver of said RADAR signal analysis system. Lam Eric P et al *"A hardware-in-the-loop simulation program for ground-based radar"* discloses a hardware in the loop simulation and an interface comprising a user-customizable plug-in.

### Summary

It is thus an object of the present disclosure to speed up and simplify the testing of DSP stages of RADAR systems.

The invention is defined by the appended independent claims. Preferred embodiments are set forth in the dependent claims and in the following description and drawings.

A first aspect of the present disclosure relates to a device for generating a digital radio detection and ranging, RADAR, signal description to be supplied to a RADAR signal analysis system under test, according to claim 1.

The digital RADAR signal description may comprise one or more of: an uncompressed I/Q waveform segment, and a compressed pulse descriptor word, PDW, pulse description.

The digital RADAR signal description may relate to a number of RADAR signal emitters having respective spatial positions.

The simulator may comprise a drag-and-drop graphical user interface, GUI, input configured to compose the RADAR signal emission scenario comprising the number of RADAR signal emitters.

The simulator may comprise a what-you-see-is-what-you-get, WYSIWYG, GUI output configured to render one or more of: a 3D preview of the RADAR signal emission scenario, and a 3D animation view of the RADAR signal emission scenario including radiation patterns of the number of RADAR signal emitters.

The RADAR signal emission scenario may be defined in accordance with a block diagram-based workflow of simulation elements. The workflow may comprise a simulation element retrievable from a library database. The simulation element may comprise one or more of: an antenna type, an emitter type, a platform type, a receiver type, a pulse, a pulse sequence, an intra-pulse modulation, MOP, an inter-pulse modulation, IPM, a RADAR signature, and a spatial movement profile.

The interface comprises a user-customizable plugin configured to export and/or import the digital RADAR signal description.

The plugin may be configured to export and/or import the digital RADAR signal description using a template.

The plugin may be configured to perform a parametric export and/or import of the digital RADAR signal description.

The plugin may be configured to export and/or import the respective spatial position of the number of RADAR signal emitters.

The plugin may be configured to access a simulation parameter of the simulator.

The simulator may be configured to access and control an operation of the plugin.

The device may further comprise one or more of: a Standard Commands for Programmable Instruments, SCPI, interface, and an SCPI recorder.

The device further comprises an emulator configured to emulate signal-deteriorating effects, wherein the signal-deteriorating effects comprise an effect of an RF frontend of said receiver of said RADAR signal analysis system on the digital RADAR signal description. The signal-deteriorating effects may further comprise an environmental effect.

A second aspect of the present disclosure relates to a method of operating a device for generating a digital RADAR signal description to be supplied to a RADAR signal analysis system under test, according to claim 14.

The method is performed by a device of the first aspect or any of its implementations.

A third aspect of the present disclosure relates to an arrangement, comprising a device of any one of the claims 1 to 13; and a RADAR signal analysis system.

A fourth aspect of the present disclosure relates to a use of an arrangement of the third aspect or any of its embodiments for testing a DSP algorithm of the RADAR signal analysis system.

A fifth aspect of the present disclosure relates to a use of an arrangement of the third aspect or any of its embodiments for training a user of the RADAR signal analysis system.

### Advantageous Effects

The present disclosure provides devices and methods for generating a digital RADAR signal description to be supplied to a RADAR signal analysis system, and more specifically to be supplied directly to a DSP stage of a receiver of said RADAR signal analysis system.

This renders obsolete setting up and calibrating a complex RF arrangement, including an RF signal generator and an RF frontend of the RADAR signal analysis system under test.

By doing so, SW developers working on DSP algorithms for RADAR signal analysis do no longer have to generate their own testing signals using commercial general-purpose tools or proprietary tools, and development labs may directly test and validate their DSP algorithms with less complexity and effort.

In addition, direct injection of a digital RADAR signal description into the RADAR signal analysis system enables a "dry run" training of users of the RADAR signal analysis system without any RF arrangement.

### Brief Description of Drawings

The above-described aspects and implementations will now be explained with reference to the accompanying drawings, in which the same or similar reference numerals designate the same or similar elements.

The features of these aspects and implementations may be combined with each other unless specifically stated otherwise.

The drawings are to be regarded as being schematic representations, and elements illustrated in the drawings are not necessarily shown to scale. Rather, the various elements are represented such that their function and general purpose become apparent to those skilled in the art.
FIG. 1 illustrates an arrangement in accordance with prior art;
FIG. 2 illustrates an arrangement in accordance with the present disclosure;
FIG. 3 illustrates an implementation of the simulator of the device of FIG. 2 in accordance with the present disclosure;
FIG. 4 illustrates an implementation of the interface of the device of FIG. 2 in accordance with the present disclosure;
FIG. 5 illustrates an implementation of the device of FIG. 2 in accordance with the present disclosure; and
FIG. 6 illustrates a flow diagram of a method 5 in accordance with the present disclosure.

### Detailed Descriptions of Drawings

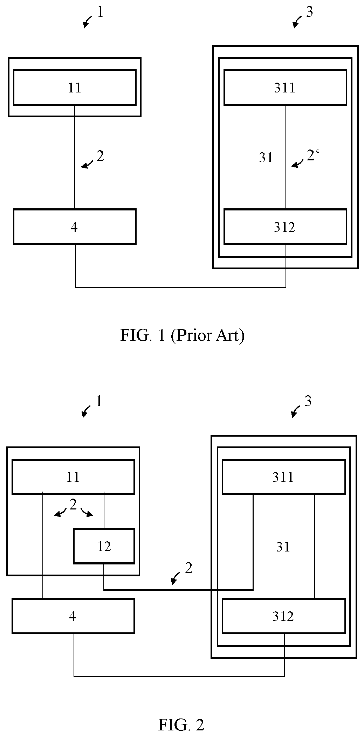

FIG. 1 illustrates an arrangement 1', 3, 4 in accordance with prior art.

The arrangement 1', 3, 4 comprises a device 1' in accordance with prior art for generating a digital RADAR signal description 2, a RADAR signal analysis system 3, and an RF signal generator 4.

Radio detection and ranging (RADAR) as used herein may refer to a concept or system for determining properties of generally moving objects, such as a range / distance, an angle, or a velocity, based on detection of radio waves. A RADAR system usually comprises a transmitter/emitter producing electromagnetic waves (i.e., a RADAR signal) in the radio or microwave frequency domain, a transmitting antenna, a receiving antenna (depending on the use case this may be the transmitting antenna), a receiver, and some sort of signal processing to determine the properties of the objects.

A digital signal description as used herein may refer to a digital description of a generally analog signal, such as a time-varying electromagnetic wave, for example a radio signal. In other words, a digital signal description may refer to a discrete-time, discrete-value description or representation of the time-varying electromagnetic wave obtained by sampling and quantization. Such a digital signal representation may further undergo source coding for data compression.

The digital RADAR signal description 2 may comprise one or more of: an uncompressed I/Q waveform segment, and a compressed pulse descriptor word, PDW, pulse description.

An I/Q waveform segment as used herein may refer to a digital signal description of an angle-modulated signal comprising two amplitude-modulated sinusoids that are offset in phase by onequarter cycle (90 degrees or π/2 radians), called in-phase (I) and quadrature (Q) components. This representation preserves a phase information of the described angle-modulated signal.

A PDW pulse description as used herein may refer to a source-coded digital signal description. A PDW pulse description may represent a number of pulses. For each represented pulse, information such as time of arrival (ToA), frequency offset, amplitude offset, pulse duration and modulation parameters is provided. Custom edge shapes and/or repetitive pulse bursts may be represented as well. Based on this information, an I/Q waveform segment or an analog RF pulse may be generated for each represented pulse.

The digital RADAR signal description 2 may relate to a number of RADAR signal emitters having respective spatial positions. In other words, a number of RADAR signals of different RADAR signal emitters may be represented by a digital RADAR signal description 2.

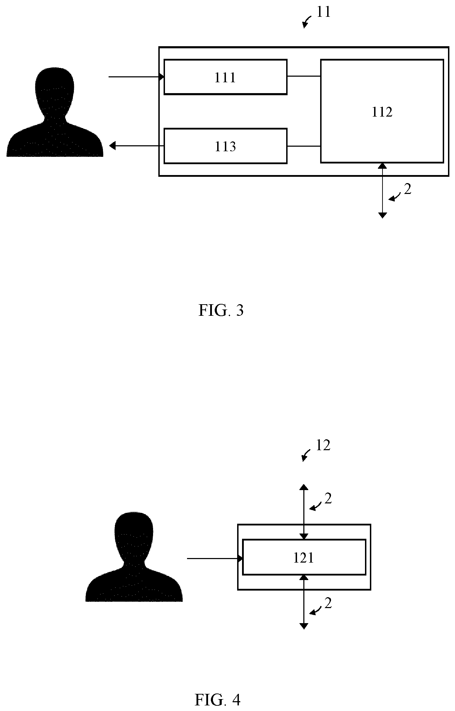

In accordance with FIG. 1, the device 1' comprises a simulator 11 which is configured to generate said digital RADAR signal description 2 based on a user-modifiable RADAR signal emission scenario 112 (see FIG. 3 below) and to be supplied, via the RF signal generator 4, to the RADAR signal analysis system 3.

The RF signal generator 4 is configured to turn the digital RADAR signal description 2 provided by the device 1' into an analog RF pulse or pulse sequence and to transmit this RF signal to the RADAR signal analysis system 3. This transmission may be either conductor-bound or conductor-less, i.e., via radio transmission (over-the-air, OTA).

The RADAR signal analysis system 3 comprises a receiver 31. The receiver 31 in turn includes a digital signal processing, DSP, stage 311 and a radio frequency, RF, frontend 312.

The RF frontend 312 is configured to receive the RF signal provided by the RF signal generator 4, and to turn it into a digital RADAR signal description 2' comprising uncompressed I/Q waveform segments or compressed PDW pulse descriptions. This digital RADAR signal description 2' may differ from the original digital RADAR signal description 2 owing to signal-deteriorating effects, such as environmental effects in the case of radio transmission, and/or effects of the RF signal processing by the RF signal generator 4 and/or the RF frontend 312 of the RADAR signal analysis system 3.

The DSP stage 311 is configured to perform RADAR signal analysis. For example, the DSP stage 311 may deploy complex DSP modules and algorithms to perform sorting, interleaving/merging, de-interleaving, classifying, ranging and tracking of one or more RADAR signals included in the digital RADAR signal description 2'.

FIG. 2 illustrates an arrangement 1, 3 in accordance with the present disclosure.

The arrangement 1, 3 comprises a device 1 in accordance with the present disclosure and the RADAR signal analysis system 3 mentioned above.

Similar to FIG. 1, the device 1 of FIG. 2 is for generating a digital RADAR signal description 2 to be supplied to the RADAR signal analysis system 3.

However, in deviation from FIG. 1, the RF signal generator 4 and the RF frontend 312 of the RADAR signal analysis system 3 are merely hinted in FIG. 2 because these elements are bypassed as will be explained below.

The device 1 comprises a simulator 11 and an interface 12.

The simulator 11 is configured to generate said digital RADAR signal description 2 based on the user-modifiable RADAR signal emission scenario 112 (see FIG. 3 below), as already mentioned in connection with FIG. 1 above.

The generated digital RADAR signal description 2 is passed on to the interface 12, the internals of which are illustrated in more detail in connection with FIG. 4 below.

The interface 12 is configured to directly supply said digital RADAR signal description 2 to the DSP stage 311 of the receiver 31 of said RADAR signal analysis system 3.

In other words, this digital RADAR signal description 2 is not exposed to signal-deteriorating effects such as environmental effects in the case of radio transmission and/or effects of the RF signal processing explained in connection with FIG. 1 above, because the RF signal generator 4 and the RF frontend 312 of the RADAR signal analysis system 3 are bypassed in the arrangement 1, 3 of FIG. 2.

One use of the arrangement 1, 3 is for testing a DSP algorithm of the RADAR signal analysis system 3. This renders obsolete setting up and calibrating a complex RF arrangement, including the RF signal generator 4 and the RF frontend 312 of the RADAR signal analysis system 3 under test, and creating test signals using commercial general-purpose tools or proprietary tools from scratch. As such, development labs may directly test and validate their DSP algorithms with less complexity and effort.

Another use of the arrangement 1, 3 is for training a user of the RADAR signal analysis system 3. Direct injection of a digital RADAR signal description 2 into the DSP stage 311 of the RADAR signal analysis system 3 enables a "dry run" training of users of the RADAR signal analysis system 3 without any RF arrangement 4, 312.

FIG. 3 illustrates an implementation of the simulator 11 of the device 1 of FIG. 2 in accordance with the present disclosure.

The simulator 11 may comprise a drag-and-drop graphical user interface, GUI, input 111 configured to compose the RADAR signal emission scenario 112 comprising the number of RADAR signal emitters.

A graphical user interface (GUI) as used herein may refer to a form of user interface that allows users to interact with electronic devices through direct manipulation of graphical elements instead of textbased user interfaces, typed command labels or text navigation, for enhanced usability .

A signal emission scenario as used herein may refer to an arrangement of a number of signal emitters having respective spatial positions, spatial orientations and correspondingly aligned radiation/emission directions.

The simulator 11 may further comprise a what-you-see-is-what-you-get, WYSIWYG, GUI output 113 configured to render one or more of: a 3D preview of the RADAR signal emission scenario 112, and a 3D animation view of the RADAR signal emission scenario 112 including radiation patterns of the number of RADAR signal emitters.

What-you-see-is-what-you-get (WYSIWYG) as used herein may refer to a circumstance which allows an arrangement, such as a signal emission scenario, to be visually edited in a form that resembles or corresponds to its appearance when rendered on an electronic display.

The RADAR signal emission scenario 112 may be defined in accordance with a block diagram-based workflow of simulation elements. The workflow may comprise a (i.e., at least one) simulation element retrievable from a library database. The simulation element may comprise one or more of: an antenna type having a radiation pattern, an emitter type such as a background emitter, a platform type, a receiver type such as a direction finding, DF, receiver, a pulse, a pulse sequence, an intra-pulse modulation, MOP, such as continuous-wave (CW), amplitude modulation (AM), frequency modulation (FM), amplitude shift keying (ASK), frequency shift keying (FSK), phase shift keying (PSK) and the like, an inter-pulse modulation, IPM, such as a frequency hopping, a ready-to-use RADAR signature, and a spatial movement profile. In other words, the block diagram-based workflow of simulation elements defines the RADAR signal emission scenario 112 comprising the number of generally moving RADAR signal emitters having respective spatial positions, spatial orientations and emitting respective RADAR signal radiation patterns in respective radiation/emission directions. In particular, IPM may comprise a predefined IPM profile from the library database or a user-defined IPM profile provided by a user-written SW plugin.

The digital RADAR signal description 2 may relate to a number of RADAR signal emitters having respective spatial positions. In other words, a number of RADAR signals of different RADAR signal emitters may be represented by a digital RADAR signal description 2.

The simulator 11 is configured to generate said digital RADAR signal description 2 based on the user-modifiable RADAR signal emission scenario 112. That is to say, the digital RADAR signal description 2 describes the RADAR signals of the number of RADAR signal emitters incident at a given RADAR signal receiver having a particular spatial position, spatial orientation and correspondingly aligned radiation/reception direction within the RADAR signal emission scenario 112. For example, the given RADAR signal receiver may be positioned in a coordinate origin of a coordinate system of the RADAR signal emission scenario 112. The given RADAR signal receiver may vary its spatial orientation within the coordinate system over time. The number of RADAR signal emitters may vary their spatial positions as well as their spatial orientations within the coordinate system over time relative to the given RADAR signal receiver. This may result in a time-varying incidence of the RADAR signals of the number of RADAR signal emitters on the given RADAR signal receiver, and a correspondingly time-varying digital RADAR signal description 2.

FIG. 4 illustrates an implementation of the interface 12 of the device 1 of FIG. 2 in accordance with the present disclosure.

The interface 12 comprises a user-customizable plugin 121 implementable as a software (SW) component.

The plugin 121 is configured to export and/or import the digital RADAR signal description 2. The import as well as the export may be implemented by file transfer, and the export may additionally be realized by streaming. As such, the plugin 121 may be configured to directly supply the digital RADAR signal description 2 to the DSP stage 311 of the receiver 31 of the RADAR signal analysis system 3 by a streaming-based export.

The plugin 121 may be configured to export and/or import the digital RADAR signal description 2 using a template. More specifically, the template may describe how to read/write a PDW pulse descriptor from/to a given file comprising a plurality of PDW pulse descriptors. An extracted PDW may be turned into an I/Q waveform sequence and stored in a library database for retrieval as a simulation element.

The plugin 121 may be configured to perform a parametric export and/or import of the digital RADAR signal description 2. As used herein, the term "parametric" may refer to defining parameters / variables which are made known to the interface hosting the plugin and which avoid hard-coding information such as file names, IP addresses and the like. For example, a parametric import based on an identifier of an I/Q waveform sequence as the relevant parameter would retrieve different I/Q waveform sequences from the library database in accordance with a value change of the relevant parameter.

The plugin 121 may be configured to access a simulation parameter of the simulator 11. That is to say, the plugin 121 has a backchannel to the simulator 11 via which it can query any simulation parameter.

The plugin 121 may be configured to export and/or import the respective spatial position of the number of RADAR signal emitters.

The simulator 11 may be configured to access and control an operation of a plugin 121 of the interface 12. In other words, the plugin 121 may be controlled via the GUI input 111 of the simulator 11, for example to be started or stopped, or to involve an error queue or messaging.

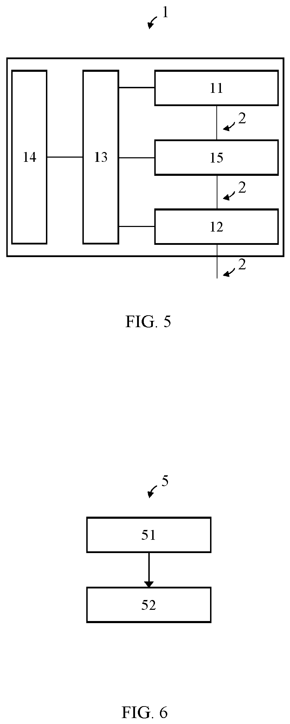

FIG. 5 illustrates an implementation of the device 1 of FIG. 2 in accordance with the present disclosure.

The device 1 may further comprise one or more of: a Standard Commands for Programmable Instruments, SCPI, interface 13, and an SCPI recorder 14 implementable as a SW component. Standard Commands for Programmable Instruments (SCPI) as used herein may refer to a standard for syntax and commands to use in controlling programmable test and measurement devices. Proficiency of this lab control protocol facilitates an integration of the device 1 and arrangement 1, 3 into a remotely controllable lab environment, as well as automated testing and measurement.

The device 1 further comprises an emulator 15 configured to emulate signal-deteriorating effects and implementable as a SW component.

The signal-deteriorating effects may comprise an environmental effect, such as weather conditions, and comprise an effect of the RF frontend 312 of said receiver 31 of said RADAR signal analysis system 3. For example, effects of the RF frontend 312 may comprise a specific resolution, a linearity over frequency, a time resolution, a fading, a temperature compensation, and a result of the PDW behavior to the signal. In this case, the signal-deteriorating effects comprise an effect of the RF frontend 312 of said receiver 31 of said RADAR signal analysis system 3, wherein the effect of the RF frontend 312 may comprise a result of the PDW behavior to the signal.

Emulating and taking into account the signal-deteriorating effects of an RF arrangement that is actually bypassed further enhances a level of realism and accuracy of the underlying use case.

FIG. 6 illustrates a flow diagram of a method 5 in accordance with the present disclosure.

The method 5 is for generating a digital RADAR signal description 2 to be supplied to a RADAR signal analysis system 3, and is performed by a device 1 in accordance with the present disclosure. The method 5 comprises generating 51 and supplying 52 steps.

The first step generates 51 said digital RADAR signal description 2 based on a user-modifiable RADAR signal emission scenario 112.

The second step directly supplies 52 said digital RADAR signal description 2 to a DSP stage 311 of a receiver 31 of said RADAR signal analysis system 3.

The technical effects and advantages described above in relation with the device 1 equally apply to the method 5 having corresponding features.

## Claims

1. A device (1) for generating a digital radio detection and ranging, RADAR, signal description (2) to be supplied to a RADAR signal analysis system (3) under test, the device (1) comprising
a simulator (11) configured to generate said digital RADAR signal description (2) based on a user-modifiable RADAR signal emission scenario (112); and
an interface (12) configured to directly supply said digital RADAR signal description (2) to a digital signal processing, DSP, stage (311) of a receiver (31) of said RADAR signal analysis system (3);
wherein the interface (12) comprises a user-customizable plugin (121) configured to export and/or import the digital RADAR signal description (2); and
**characterized in that** the device (1) further comprises
an emulator (15) configured to emulate signal-deteriorating effects,
wherein the signal- deteriorating effects comprise an effect of an RF frontend (312) of said receiver (31) of said RADAR signal analysis system (3) on said digital RADAR signal description (2).

2. The device (1) of claim 1,
wherein the digital RADAR signal description (2) comprises one or more of:
- an uncompressed I/Q waveform segment, and
- a compressed pulse descriptor word, PDW, pulse description.

3. The device (1) of claim 1 or claim 2,
wherein the digital RADAR signal description (2) relates to a number of RADAR signal emitters having respective spatial positions.

4. The device (1) of claim 3,
wherein the simulator (11) comprises a drag-and-drop graphical user interface, GUI, input (111) configured to compose the RADAR signal emission scenario (112) comprising the number of RADAR signal emitters.

5. The device (1) of claim 4,
wherein the simulator (11) comprises a what-you-see-is-what-you-get, WYSIWYG, GUI output (113) configured to render one or more of:
- a 3D preview of the RADAR signal emission scenario (112), and
- a 3D animation view of the RADAR signal emission scenario (112) including radiation patterns of the number of RADAR signal emitters.

6. The device (1) of any one of the preceding claims,
wherein the RADAR signal emission scenario (112) is defined in accordance with a block diagram-based workflow of simulation elements;
wherein the workflow comprises a simulation element retrievable from a library database; and
wherein the simulation element comprises one or more of:
- an antenna type,
- an emitter type,
- a platform type,
- a receiver type,
- a pulse,
- a pulse sequence,
- an intra-pulse modulation, MOP, and
- an inter-pulse modulation, IPM,
- a RADAR signature, and
- a spatial movement profile.

7. The device (1) of any one of the preceding claims,
wherein the plugin (121) is configured to export and/or import the digital RADAR signal description (2) using a template.

8. The device (1) of any one of the preceding claims,
wherein the plugin (121) is configured to perform a parametric export and/or import of the digital RADAR signal description (2).

9. The device (1) of any one of the preceding claims when depending on claim 3,
wherein the plugin (121) is configured to export and/or import the respective spatial position of the number of RADAR signal emitters.

10. The device (1) of any one of the preceding claims,
wherein the plugin (121) is configured to access at least one simulation parameter of the simulator (11).

11. The device (1) of any one of the preceding claims,
wherein the simulator (11) is configured to access and control an operation of the plugin (121).

12. The device (1) of any one of the preceding claims, further comprising one or more of:
- a Standard Commands for Programmable Instruments, SCPI, interface (13), and
- an SCPI recorder (14).

13. The device (1) of any one of the preceding claims,
wherein the signal- deteriorating effects comprise an environmental effect.

14. A method (5), being performed by a device (1) of any one of the claims 1 to 13, of operating a device (1) for generating a digital RADAR signal description (2) to be supplied to a RADAR signal analysis system (3) under test, the device (1) comprising an interface (12), the method comprising
generating (51) said digital RADAR signal description (2) based on a user-modifiable RADAR signal emission scenario (112); and
directly supplying (52) said digital RADAR signal description (2) by the interface (12) to a DSP stage (311) of a receiver (31) of said RADAR signal analysis system (3);
wherein the interface (12) comprises a user-customizable plugin (121) configured to export and/or import the digital RADAR signal description (2); and **characterized in that** the device (1) further comprises an emulator (15) configured to emulate signal-deteriorating effects, wherein the signal- deteriorating effects comprise an effect of an RF frontend (312) of said receiver (31) of said RADAR signal analysis system (3) on said digital RADAR signal description (2).

15. A system (1, 3), comprising
the device (1) of any one of the claims 1 to 13; and
a RADAR signal analysis system (3).

16. Use of a system (1, 3) of claim 15 for testing a DSP algorithm of the RADAR signal analysis system (3).

17. Use of a system (1, 3) of claim 15 for training a user of the RADAR signal analysis system (3).

## Patentansprüche

1. Vorrichtung (1) zum Erzeugen einer digitalen Radio-Detection-And-Ranging-Signalbeschreibung, RADAR-Signalbeschreibung (2), die einem zu testenden RADAR-Signalanalysesystem (3) zuzuführen ist, die Vorrichtung (1) umfassend
einen Simulator (11), der konfiguriert ist, um die digitale RADAR-Signalbeschreibung (2) basierend auf einem benutzermodifizierbaren RADAR-Signalemissionsszenario (112) zu erzeugen; und
eine Schnittstelle (12), die konfiguriert ist, um die digitale RADAR-Signalbeschreibung (2) einer digitalen Signalverarbeitungsstufe, DSP-Stufe (311), eines Empfängers (31) des RADAR-Signalanalysesystems (3) direkt zuzuführen;
wobei die Schnittstelle (12) ein benutzerdefinierbares Plugin (121), das konfiguriert ist, um die digitale RADAR-Signalbeschreibung (2) zu exportieren und/oder zu importieren, umfasst; und **dadurch gekennzeichnet, dass** die Vorrichtung (1) ferner umfasst
einen Emulator (15), der konfiguriert ist, um signalverschlechternde Effekte zu emulieren,
wobei die signalverschlechternden Effekte einen Effekt eines HF-Frontends (312) des Empfängers (31) des RADAR-Signalanalysesystems (3) auf die digitale RADAR-Signalbeschreibung (2) umfassen.

2. Vorrichtung (1) nach Anspruch 1,
wobei die digitale RADAR-Signalbeschreibung (2) eines oder mehrere umfasst von:
- einem unkomprimierten I/Q-Wellenformsegment und
- einer komprimierten Impulsdeskriptorwortimpulsbeschreibung, PDW-Impulsbeschreibung.

3. Vorrichtung (1) nach Anspruch 1 oder 2,
wobei sich die digitale RADAR-Signalbeschreibung (2) auf eine Anzahl von RADAR-Signalemittern, die jeweilige räumliche Positionen aufweisen, bezieht.

4. Vorrichtung (1) nach Anspruch 3,
wobei der Simulator (11) eine Drag-and-Drop-Eingabe (111) mit grafischer Benutzerschnittstelle, GUI, die konfiguriert ist, um das RADAR-Signalemissionsszenario (112), umfassend die Anzahl von RADAR-Signalemittern, zusammenzustellen, umfasst.

5. Vorrichtung (1) nach Anspruch 4,
wobei der Simulator (11) eine What-You-See-Is-What-You-Get-GUI-Ausgabe, WYSIWYG-GUI-Ausgabe (113), umfasst, die konfiguriert ist, um eine oder mehrere darzustellen von:
- einer 3D-Vorschau des RADAR-Signalemissionsszenarios (112) und
- einer 3D-Animationsansicht des RADAR-Signalemissionsszenarios (112) einschließlich Strahlungsdiagrammen der Anzahl von RADAR-Signalemittern.

6. Vorrichtung (1) nach einem der vorstehenden Ansprüche,
wobei das RADAR-Signal-Emissionsszenario (112) gemäß einem blockdiagrammbasierten Arbeitsablauf von Simulationselementen definiert ist;
wobei der Arbeitsablauf ein Simulationselement, das aus einer Bibliotheksdatenbank abrufbar ist, umfasst; und
wobei das Simulationselement eines oder mehrere umfasst von:
- einer Antennenart,
- einer Emitterart,
- einer Plattformart,
- einer Empfängerart,
- einem Impuls,
- einer Impulssequenz,
- einer Intraimpulsmodulation, MOP und
- einer Zwischenimpulsmodulation, IPM,
- einer RADAR-Signatur und
- einem Profil räumlicher Bewegung.

7. Vorrichtung (1) nach einem der vorstehenden Ansprüche,
wobei das Plugin (121) konfiguriert ist, um die digitale RADAR-Signalbeschreibung (2) unter Verwendung einer Vorlage zu exportieren und/oder zu importieren.

8. Vorrichtung (1) nach einem der vorstehenden Ansprüche,
wobei das Plugin (121) konfiguriert ist, um einen parametrischen Export und/oder Import der digitalen RADAR-Signalbeschreibung (2) durchzuführen.

9. Vorrichtung (1) nach einem der vorstehenden Ansprüche, wenn abhängig von Anspruch 3,
wobei das Plugin (121) konfiguriert ist, um die jeweilige räumliche Position der Anzahl von RADAR-Signalemittern zu exportieren und/oder zu importieren.

10. Vorrichtung (1) nach einem der vorstehenden Ansprüche,
wobei das Plugin (121) konfiguriert ist, um auf mindestens einen Simulationsparameter des Simulators (11) zuzugreifen.

11. Vorrichtung (1) nach einem der vorstehenden Ansprüche,
wobei der Simulator (11) konfiguriert ist, um auf einen Betrieb des Plugins (121) zuzugreifen und diesen zu steuern.

12. Vorrichtung (1) nach einem der vorstehenden Ansprüche, ferner umfassend eines oder mehrere von:
- einer Schnittstelle (13) gemäß Standard Commands for Programmable Instruments, SCPI, und
- einen SCPI-Rekorder (14).

13. Vorrichtung (1) nach einem der vorstehenden Ansprüche,
wobei die signalverschlechternden Effekte einen Umwelteffekt umfassen.

14. Verfahren (5), das durch eine Vorrichtung (1) nach einem der Ansprüche 1 bis 13 durchgeführt wird, zum Betreiben einer Vorrichtung (1) zum Erzeugen einer digitalen RADAR-Signalbeschreibung (2), die einem zu testenden RADAR-Signalanalysesystem (3) zuzuführen ist, die Vorrichtung (1) umfassend eine Schnittstelle (12), das Verfahren umfassend
Erzeugen (51) der digitalen RADAR-Signalbeschreibung (2) basierend auf einem benutzermodifizierbaren RADAR-Signalemissionsszenario (112); und
direkt Zuführen (52) der digitalen RADAR-Signalbeschreibung (2), durch die Schnittstelle (12), einer digitalen Signalverarbeitungsstufe, DSP-Stufe (311), eines Empfängers (31) des RADAR-Signalanalysesystems (3);
wobei die Schnittstelle (12) ein benutzerdefinierbares Plugin (121), das konfiguriert ist, um die digitale RADAR-Signalbeschreibung (2) zu exportieren und/oder zu importieren, umfasst; und **dadurch gekennzeichnet, dass** die Vorrichtung (1) ferner einen Emulator (15), der konfiguriert ist, um signalverschlechternde Effekte zu emulieren, umfasst, wobei die signalverschlechternden Effekte einen Effekt eines HF-Frontends (312) des Empfängers (31) des RADAR-Signalanalysesystems (3) auf die digitale RADAR-Signalbeschreibung (2) umfassen.

15. System (1, 3), umfassend
die Vorrichtung (1) nach einem der Ansprüche 1 bis 13; und
ein RADAR-Signalanalysesystem (3).

16. Verwendung eines Systems (1, 3) nach Anspruch 15 zum Testen eines DSP-Algorithmus des RADAR-Signalanalysesystems (3).

17. Verwendung eines Systems (1, 3) nach Anspruch 15 zum Trainieren eines Benutzers des RADAR-Signalanalysesystems (3).

## Revendications

1. Dispositif (1) destiné à générer une description de signal de détection et télémétrie par radioélectricité, RADAR, numérique (2) à fournir à un système d'analyse de signal RADAR (3) sous test, le dispositif (1) comprenant
un simulateur (11) configuré pour générer ladite description de signal RADAR numérique (2) sur la base d'un scénario d'émission de signal RADAR (112) pouvant être modifié par l'utilisateur ; et
une interface (12) configurée pour fournir directement ladite description de signal RADAR numérique (2) à un étage de traitement numérique de signal, DSP (311) d'un récepteur (31) dudit système d'analyse de signal RADAR (3) ;
dans lequel l'interface (12) comprend un plugciel (121) pouvant être personnalisé par l'utilisateur configuré pour exporter et/ou importer la description de signal RADAR numérique (2) ; et **caractérisé en ce que** le dispositif (1) comprend en outre
un émulateur (15) configuré pour émuler des effets de détérioration de signal,
dans lequel les effets de détérioration de signal comprennent un effet d'un frontal RF (312) dudit récepteur (31) dudit système d'analyse de signal RADAR (3) sur ladite description de signal RADAR numérique (2).

2. Dispositif (1) selon la revendication 1,
dans lequel la description de signal RADAR numérique (2) comprend l'un ou plusieurs de :
- un segment de forme d'onde I/Q non compressé, et
- une description d'impulsion de mot descripteur d'impulsion, PDW, compressée.

3. Dispositif (1) selon la revendication 1 ou la revendication 2,
dans lequel la description de signal RADAR numérique (2) concerne un certain nombre d'émetteurs de signal RADAR ayant des positions spatiales respectives.

4. Dispositif (1) selon la revendication 3,
dans lequel le simulateur (11) comprend une entrée d'interface utilisateur graphique, GUI, « glisser-déposer » (111) configurée pour composer le scénario d'émission de signal RADAR (112) qui comprend le nombre d'émetteurs de signal RADAR.

5. Dispositif (1) selon la revendication 4,
dans lequel le simulateur (11) comprend une sortie de GUI, « ce que vous voyez est ce que vous obtenez », WYSIWYG, (113) configurée pour afficher l'un ou plusieurs de :
- un aperçu 3D du scénario d'émission de signal RADAR (112), et
- une vue d'animation 3D du scénario d'émission de signal RADAR (112) qui comporte des diagrammes de rayonnement du nombre d'émetteurs de signal RADAR.

6. Dispositif (1) selon l'une quelconque des revendications précédentes,
dans lequel le scénario d'émission de signal RADAR (112) est défini conformément à un flux de travail basé sur un schéma-bloc d'éléments de simulation ;
dans lequel le flux de travail comprend un élément de simulation pouvant être récupéré à partir d'une base de données de bibliothèque ; et
dans lequel l'élément de simulation comprend l'un ou plusieurs parmi :
- un type d'antenne,
- un type d'émetteur,
- un type de plateforme,
- un type de récepteur,
- une impulsion,
- une séquence d'impulsions,
- une modulation intra-impulsion, MOP, et
- une modulation inter-impulsions, IPM,
- une signature RADAR, et
- un profil de mouvement spatial.

7. Dispositif (1) selon l'une quelconque des revendications précédentes,
dans lequel le plugciel (121) est configuré pour exporter et/ou importer la description de signal RADAR numérique (2) à l'aide d'un modèle.

8. Dispositif (1) selon l'une quelconque des revendications précédentes,
dans lequel le plugciel (121) est configuré pour effectuer une exportation et/ou une importation paramétrique de la description de signal RADAR numérique (2).

9. Dispositif (1) selon l'une quelconque des revendications précédentes, lorsqu'elle dépend de la revendication 3,
dans lequel le plugciel (121) est configuré pour exporter et/ou importer la position spatiale respective du nombre d'émetteurs de signal RADAR.

10. Dispositif (1) selon l'une quelconque des revendications précédentes,
dans lequel le plugciel (121) est configuré pour accéder à au moins un paramètre de simulation du simulateur (11).

11. Dispositif (1) selon l'une quelconque des revendications précédentes,
dans lequel le simulateur (11) est configuré pour accéder à et commander une opération du plugciel (121).

12. Dispositif (1) selon l'une quelconque des revendications précédentes, comprenant l'un ou plusieurs de :
- une interface de Commandes standard pour les instruments programmables, SCPI, (13), et
- un enregistreur SCPI (14).

13. Dispositif (1) selon l'une quelconque des revendications précédentes,
dans lequel les effets de détérioration de signal comprennent un effet environnemental.

14. Procédé (5), qui est mis en œuvre par un dispositif (1) selon l'une quelconque des revendications 1 à 13, de fonctionnement d'un dispositif (1) destiné à générer une description de signal RADAR numérique (2) à fournir à un système d'analyse de signal RADAR (3) sous test, le dispositif (1) comprenant une interface (12), le procédé comprenant
la génération (51) de ladite description de signal RADAR numérique (2) sur la base d'un scénario d'émission de signal RADAR (112) pouvant être modifié par l'utilisateur ; et
la fourniture directe (52) de ladite description de signal RADAR numérique (2) par l'interface (12) à un étage DSP (311) d'un récepteur (31) dudit système d'analyse de signal RADAR (3) ;
dans lequel l'interface (12) comprend un plugciel (121) pouvant être personnalisé par l'utilisateur configuré pour exporter et/ou importer la description de signal RADAR numérique (2) ; et **caractérisé en ce que** le dispositif (1) comprend en outre un émulateur (15) configuré pour émuler des effets de détérioration de signal, dans lequel les effets de détérioration de signal comprennent un effet d'un frontal RF (312) dudit récepteur (31) dudit système d'analyse de signal RADAR (3) sur ladite description de signal RADAR numérique (2).

15. Système (1, 3), comprenant
le dispositif (1) selon l'une quelconque des revendications 1 à 13 ; et
un système d'analyse de signal RADAR (3).

16. Utilisation d'un système (1, 3) selon la revendication 15 pour tester un algorithme DSP du système d'analyse de signal RADAR (3).

17. Utilisation d'un système (1, 3) selon la revendication 15 pour former un utilisateur du système d'analyse de signal RADAR (3).
